# EUROPEAN PATENT APPLICATION

(11) **EP 4 748 479 A1**
(43) Date of publication of application: **27.05.2026**
(21) Application number: 25212824.4
(22) Date of filing: 31.10.2025
(51) Int. Cl.: B01D 53/14, B01D 53/26

(54) **METHOD AND APPARATUS FOR THE FILTRATION, PURIFICATION AND DEODORISATION OF GREASY-OILY VAPOURS AND FUMES**

(30) Priority: 31.10.2024 IT 202400024591
(71) Applicant: Negri, Fabio, 46028 Sermide E Felonica MN (IT)
(72) Inventor: Negri, Fabio, 46028 Sermide E Felonica MN (IT)
(74) Representative: Manzella & Associati

(57) **Abstract**

The apparatus (1) for filtering, purifying, and deodorizing greasy-oily vapors and fumes comprises a box-shaped structure (90) that forms an extraction hood positioned above a source emitting said fumes, and a housing (100) positioned above said box-shaped structure (90). The box-shaped structure (90) and/or the housing (100) comprise at least one mechanical device (110) for filtering said fumes and vapors; at least one device for extracting said fumes and vapors; at least one refrigerated condensation module (120) capable of purifying said fumes and vapors by refrigerated condensation; at least one activated carbon device (130) capable of deodorizing said fumes and vapors. Said at least one mechanical device (110) for filtering said fumes; at least one device for extracting said fumes; at least one refrigerated condensation module (120) capable of purifying said fumes by refrigerated condensation and at least one activated carbon device (130) capable of deodorizing said fumes are arranged in sequence in a path through which said fumes pass.

## Description

### Technical field

The present invention relates to a method for treating fumes, in particular a method for filtering, purifying, and deodorizing greasy-oily vapors and fumes, as well as apparatus capable of implementing this method. The apparatus is intended particularly, but not exclusively, for use in professional or domestic catering.

### Prior art

It is well known that cooking food, in professional or domestic catering, produces greasy-oily vapors and fumes that must be expelled from the working environment. This requirement is felt, more generally, in all production contexts where, as a result of a manufacturing process, emissions are produced in the form of fumes or vapors that can be harmful to operators.

Traditionally, greasy and oily vapors and fumes are expelled from the workplace using apparatus comprising one or more hoods connected to a chimney. The hood allows the fumes to be conveyed and the chimney allows them to be removed from the workplace and expelled into the atmosphere.

However, it is often not possible to install and use a chimney connected to the hood to expel oily fumes and vapors into the atmosphere, for example because the structure of the workplace does not allow it.

Therefore, apparatus has been designed to filter, purify, and deodorize greasy and oily vapors and fumes.

The purified fumes can then be returned to the same work environment without the need to remove and expel them through a chimney.

In particular, apparatus has been proposed that uses devices capable of treating fumes by condensation on contact with a cooled surface. For example, utility model CN219433821U describes an apparatus for treating only kitchen water vapor, comprising a hood equipped with a refrigeration system, equipped with an evaporator, in contact with which the water vapor condenses and can be extracted from the hood in a liquid state.

Patent application DE10020205A1 illustrates further apparatus for treating kitchen fumes, equipped with a condensation cell for the fumes.

However, a disadvantage of the known apparatuses is their structural complexity, which results in large dimensions, poor versatility, and complicated maintenance. Furthermore, the known apparatuses are generally suitable for treating water vapor, but not for treating greasy-oily fumes.

### Disclosure

The task of the present invention is to mitigate or solve the aforementioned problems by devising apparatus for the filtration, purification, and deodorization of greasy-oily vapors and fumes that allows for improved treatment efficiency, as well as compactness and simplicity of construction.

A further purpose of the invention is to provide apparatus that is easy to maintain.

A further purpose of the invention is to create an apparatus for the purification of fumes that is simple in design and function, with reliable operation, versatile use, and relatively low cost.

The aforementioned purposes are achieved, according to the present invention, by the apparatus for filtering, purifying, and deodorizing greasy-oily vapors and fumes according to the attached claims.

The apparatus for filtering, purifying, and deodorizing greasy-oily vapors and fumes according to the invention comprises a box-shaped structure that forms an extraction hood positioned above a source of said fumes, and a housing positioned above said box-shaped structure. The box-shaped structure and/or housing comprise at least one mechanical device for filtering said fumes and vapors; at least one device for extracting said fumes and vapors; at least one refrigerated condensation module capable of purifying said fumes and vapors by refrigerated condensation; at least one activated carbon device capable of deodorizing said fumes and vapors.

According to the invention, said at least one mechanical device for filtering said fumes; at least one device for extracting said fumes; at least one refrigerated condensation module capable of purifying said fumes by refrigerated condensation; and at least one activated carbon device capable of deodorizing said fumes are arranged in sequence in a path through which said fumes pass.

Preferably, the apparatus comprises a pair of side partitions, arranged on either side of the source of the fumes and vapors to be treated, and arranged below the aforementioned housing.

Preferably, the apparatus comprises means for returning the purified and deodorized fumes to the same working environment at the end of the purification and deodorization treatments.

More preferably, said means for reintroducing the purified and deodorized fumes into the same working environment comprise or consist of outlet holes or grilles.

Preferably, said outlet holes or grids are located in the cartridges of the aforementioned activated carbon device.

According to one aspect of the invention, the box structure is equipped internally with an electrostatic filter capable of performing electrostatic purification of the fumes and vapors to be treated.

Preferably, the mechanical device for filtering the fumes and vapors to be treated comprises or consists of a cross-mesh filter and/or a labyrinth filter.

Preferably, the refrigerated condensation module comprises a refrigerated chamber.

Preferably, the refrigerated chamber houses a heat exchanger device internally.

Preferably, the heat exchanger device comprises or consists of a refrigeration circuit.

In particular, said heat exchanger device comprises an evaporator, a condenser, and a compressor of a refrigeration circuit.

Preferably, said refrigeration circuit is affected by the circulation of a refrigerant.

Preferably, the refrigerated condensation module comprises means for detecting a temperature of the refrigerated chamber or a temperature at the compressor of the refrigeration circuit.

Preferably, the refrigerated condensation module comprises means for detecting a temperature at an evaporator and/or a condenser of the refrigeration circuit.

Preferably, the means for detecting a temperature comprise or consist of a thermometer and/or a temperature probe and/or a thermostat.

Preferably, the refrigerated condensation module comprises means configured to switch said heat exchanger device on and off as a function of said detected temperature.

Preferably, said means configured to control the switching on and off of said heat exchanger device as a function of said detected temperature comprise or consist of an electronic processing unit.

Preferably, the apparatus comprises means for detecting the pressure of said refrigerant medium of said refrigeration circuit at said evaporator, condenser, or compressor.

Preferably, the apparatus comprises means configured to control the switching on and off of said heat exchanger device as a function of said detected pressure.

Preferably, the apparatus comprises means for separating condensation droplets from the flow of fumes and vapors to be treated.

The invention also relates to a method for filtering, purifying, and deodorizing greasy-oily vapors and fumes, comprising the following steps:
a. providing apparatus for purifying fumes, comprising a box-shaped structure forming an extraction hood positioned above a source emitting said vapors and fumes and a housing positioned above said box-shaped structure;
b. performing a first stage of treatment of the vapors and fumes emitted by said emission source, extracting said vapors and fumes by means of an extraction device and introducing them into a mechanical filtration device;
c. performing a second stage of treatment of said fumes by introducing said fumes, downstream of said mechanical filtration device, into a refrigerated condensation module capable of performing purification by refrigerated condensation;
d. performing a third stage of treatment, introducing the fumes, downstream of the refrigerated condensation module designed to perform purification by refrigerated condensation, into an activated carbon device designed to perform deodorization of the fumes.

According to one aspect of the invention, the method also provides for performing an additional stage of treatment of said fumes by introducing said fumes into a device capable of performing electrostatic purification of said fumes and vapors.

### Brief description of the drawings

The details of the invention will be more evident from the detailed description of a preferred embodiment of the apparatus for filtering, purifying, and deodorizing greasy-oily vapors and fumes according to the invention, illustrated for illustrative purposes in the accompanying drawings, in which:
Figure 1 shows a perspective view of a first embodiment of the apparatus according to the invention, from a front angle;
Figures 2 and 3 illustrate further perspective views of the apparatus illustrated in Figure 1, from different angles;
Figures 4 and 5 illustrate respective perspective views of a detail of the embodiment illustrated in Figure 1, from different angles;
Figure 6 shows a perspective view of a detail of a second embodiment of the apparatus according to the invention.

### Description of Embodiments of the Invention

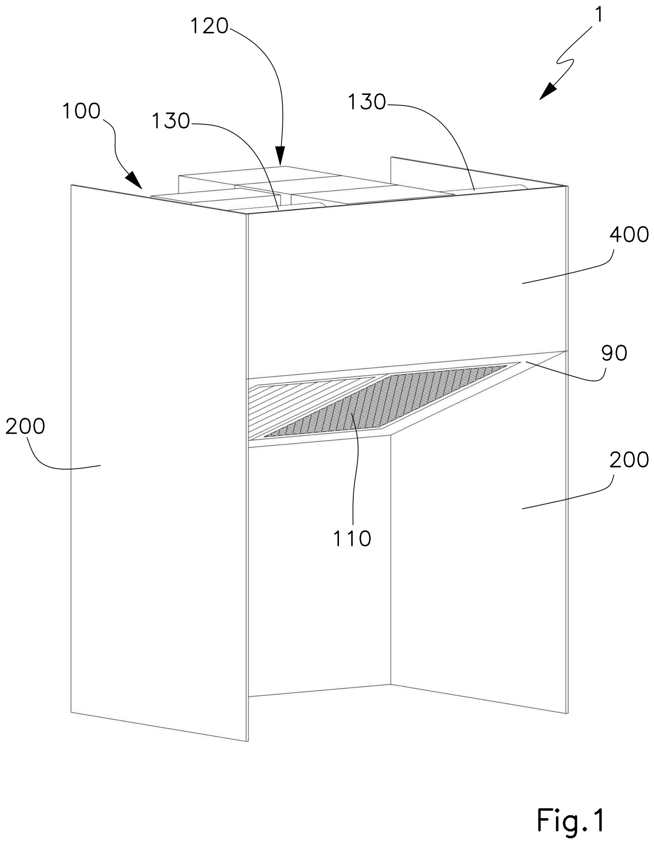

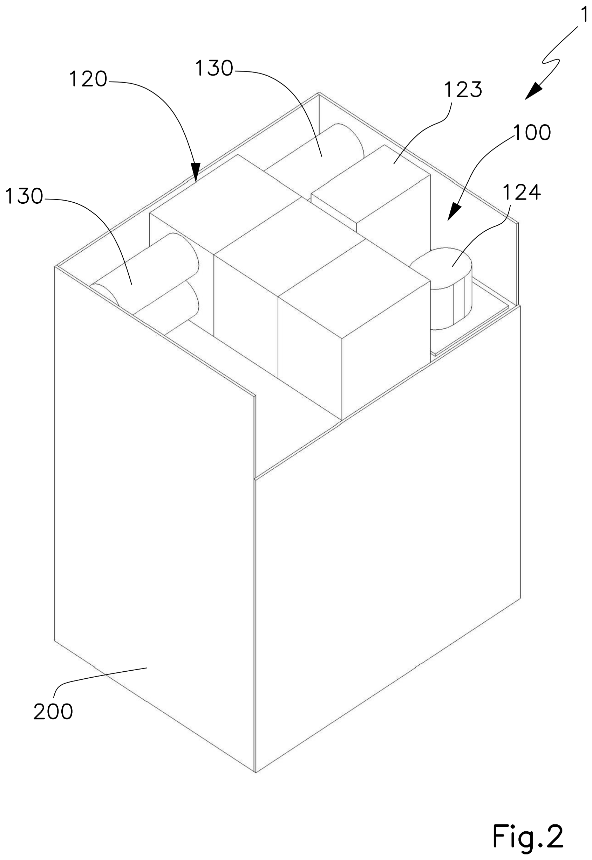

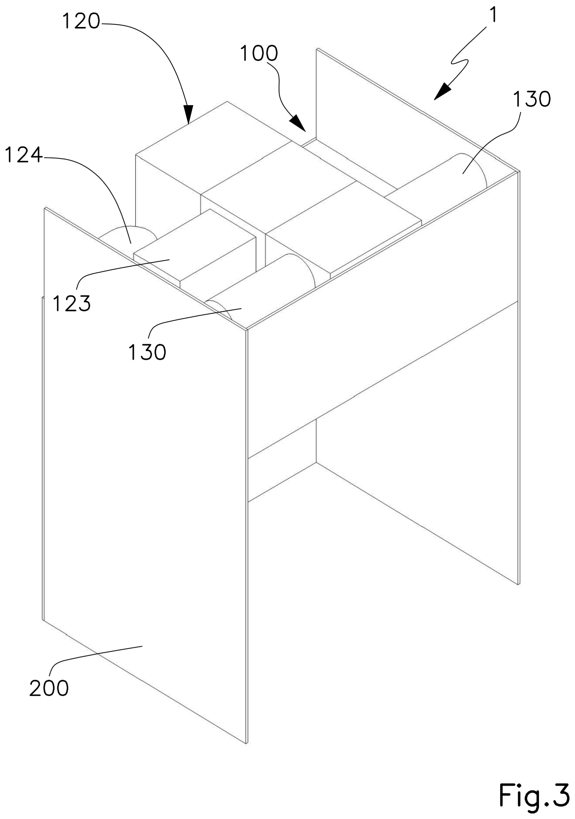

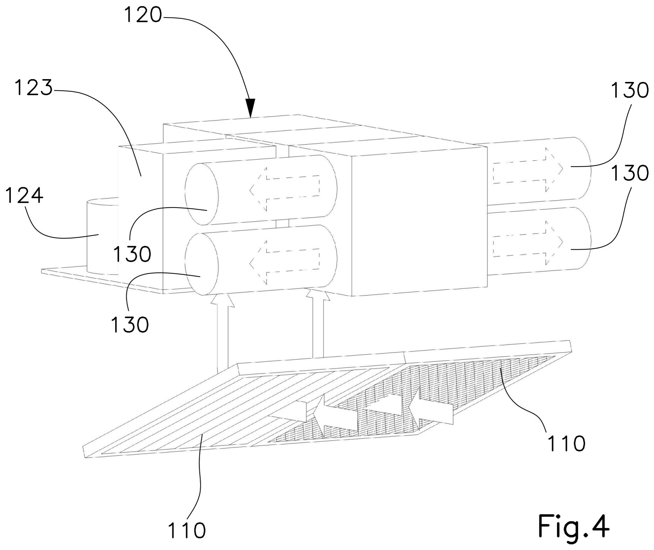

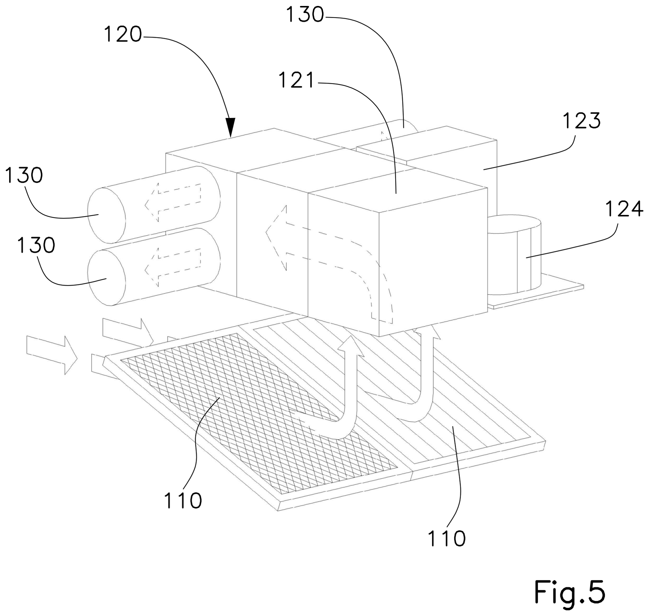

With particular reference first to Figures 1-5, 1 indicates the apparatus for filtering, purifying, and deodorizing greasy-oily vapors and fumes according to the present invention, which will be referred to as apparatus 1 for simplicity.

Apparatus 1 comprises a box-like structure 90 designed to be placed, during use, over a source of fumes, forming a hood designed to receive and convey the vapors and fumes produced by the source.

The emitting source may be a stove, grill, fryer, or other similar device for cooking food, not shown in the figures.

Although the following description refers only to the catering sector, it is understood that the apparatus of the invention could also be used in other technical sectors where emissions in the form of fumes or vapors are produced in a closed environment.

Preferably, the apparatus 1 is equipped with a pair of side partitions 200, arranged on either side of the emission source, to facilitate the containment and conveying of the fumes.

The apparatus 1 may also include a cabinet or frame supporting the emission source, arranged between the side partitions 200, not shown in the figures.

The structure of the apparatus 1 comprises a housing 100, arranged above the box structure 90. Inside the box structure 90 and the housing 100, a series of devices are installed to carry out filtration, purification, and deodorization treatments of the vapors and greasy-oily fumes emitted by the emission source.

Preferably, the housing 100 is enclosed between the side partitions 200, which form its side walls, and a front panel 400 (see Figure 1).

In particular, at least one mechanical filtration device 110 is arranged inside the box structure 90 and/or housing 100. Preferably, the mechanical filtration device 110 comprises a cross-mesh filter. Alternatively or in addition, the mechanical filtration device 110 may comprise a labyrinth filter.

Inside the box structure 90 and/or the housing 100, there is also a fume extraction device, for example a fan, not shown in the figures.

According to the invention, the apparatus 1 comprises a refrigerated condensation module 120 designed to perform refrigerated condensation purification of vapors and fumes, arranged in the box-shaped structure 90 and/or housing 100.

The refrigerated condensation module 120 comprises a refrigerated chamber 121, designed to be traversed in a longitudinal direction by the fumes to be treated. Inside the chamber 121 there is an evaporator of a refrigeration circuit, not visible in the figures. Preferably, the evaporator comprises a copper coil, arranged so as to come into contact with the fumes and vapors passing through chamber 121. The refrigerated condensation module also comprises a condenser 123 of the refrigeration circuit and a compressor 124 of the refrigeration cycle, preferably arranged inside housing 100.

Preferably, the refrigeration circuit is affected by the circulation of a refrigerant.

Preferably, the refrigerated condensation module 120 comprises a thermometer or temperature probe or thermostat, not shown in the figures, for detecting an internal temperature of the refrigerated chamber 121 or a temperature at the compressor 124.

Preferably, the refrigerated condensation module 120 comprises a thermometer or temperature probe or thermostat, not shown in the figures, for detecting a temperature at the evaporator and/or condenser 123 of the refrigeration circuit.

The thermometer or temperature probe or thermostat is capable of automatically controlling, for example by means of a specially configured electronic processing unit, the switching on and off of the refrigeration unit according to the detected temperature.

Preferably, the apparatus 1 comprises means for detecting the pressure of the refrigerant of the refrigeration circuit at the evaporator, the condenser 123, or the compressor 124.

Preferably, the apparatus comprises means configured to control the switching on and off of said heat exchanger device as a function of said detected pressure.

Preferably, said means configured to control the switching on and off of the heat exchanger device as a function of the detected pressure comprise an electronic processing unit.

Preferably, downstream of the refrigerated chamber 121, there is a droplet separator device for separating the condensation droplets present in the flow of fumes and vapors to be treated from the gaseous flow.

The apparatus 1 also comprises a device 130 for deodorizing the fumes. Preferably, the device 130 comprises one or more activated carbon cartridges, which are intended to be traversed by the fumes and vapors to be treated.

The apparatus 1 also comprises means for returning the purified and deodorized fumes to the same working environment at the end of the treatment, not shown in the figures. Preferably, the means for returning the purified and deodorized fumes to the same working environment at the end of the treatment comprise outlet holes or grids located in the activated carbon cartridges 130.

According to the invention, the treatment devices described are arranged in sequence in a path through which the fumes and vapors pass, so that the treatments are performed in a predefined sequence. In the figures, the arrows represent the direction of flow of the fumes and vapors to be treated.

Preferably, the treatment sequence first involves mechanical filtration, therefore the mechanical fume filtration device 110 is installed upstream in the fume passageway. Preferably, the mechanical filtration device 110 is arranged to form a lower wall, preferably inclined, of the box structure 90.

Downstream of the mechanical filtration device 110, the refrigerated condensation module 120 is preferably installed to perform purification by refrigerated condensation of the fumes and vapors. Preferably, the refrigerated chamber 121 of the device 120 is arranged in a substantially central portion of the housing 100. Downstream of the refrigerated condensation module 120, in the fume passageway, a fan is preferably installed to suck in the fumes, causing them to pass through the mechanical filtration device 110.

Downstream of the fan, the activated carbon device 130 is installed. According to a preferred embodiment, the activated carbon device 130 provides one or more activated carbon cartridges, arranged on the sides of the refrigerated chamber 121.

However, it should be noted that a different arrangement of the treatment devices described may also be envisaged in order to implement different sequences of treatment of fumes and vapors.

The operation of the apparatus 1 for the purification of fumes and vapors is easily understood from the following description.

When it is necessary to treat fumes and vapors, i.e., when the emission source emits fumes and vapors that must be treated, the operator starts up apparatus 1, in particular the fan and the refrigeration cycle of the refrigerated condensation module 120.

The fumes and vapors are then first forced through the mechanical filtration device 110, which constitutes the first stage of treatment. The mechanical filtration device 110 retains the coarsest particles, whether solid or liquid, carried in suspension in the fumes and vapors.

The fumes and vapors are then fed into the refrigerated chamber 121 of the refrigerated condensation module 120, where they flow around the coil contained in the refrigerated chamber 121. Upon contact with the cold surface of the coil, the water vapor and a fraction, in particular an oily fraction, condenses or freezes, separating from the fume stream. The condensed fraction is collected in liquid form in a lower portion of the refrigerated chamber 121, from where it is periodically removed and disposed of via an outlet duct. The refrigerated condensation module 120 constitutes the second stage of fume treatment.

Subsequently, the fumes are fed into the activated carbon device 130, which constitutes the third stage of treatment, aimed at removing any odors from the fumes.

After treatment, the fumes are returned to the same working environment through the outlet holes or grilles.

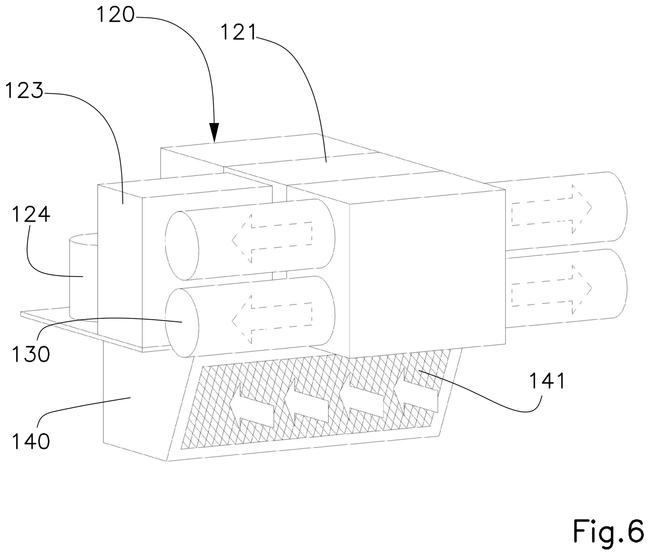

Figure 6 illustrates a different embodiment of the fume purification apparatus 1. This embodiment provides, in addition to the treatment devices present in the embodiment described above and illustrated in Figures 1-5, an additional treatment device 140, in particular an electrostatic filter, designed to perform electrostatic purification of the vapors and greasy-oily fumes that pass through it.

The electrostatic filter 140 is preferably arranged inside the box structure 90 and/or in the housing 100, downstream of the mechanical filtration device 110 and upstream of the refrigerated condensation module 120, and constitutes an additional treatment stage.

Preferably, the electrostatic filter 140 comprises a chamber designed to be traversed by the fumes to be treated. Collecting electrodes, in the form of plates or tubes, and discharge or emission electrodes, in the form of wires, are arranged in the chamber. The discharge or emission electrodes are positioned parallel to the collecting electrodes (or coaxially in the case of tubular gathering electrodes).

Preferably, the electrostatic filter 140 comprises a removable mesh filter 141 positioned upstream of the chamber housing the discharge electrodes and collection electrodes.

Experiments have shown that the electrostatic filter 140 is particularly effective for treating greasy-oily fumes resulting from cooking at high temperatures, for example above 170°C, of foods with a high content of animal or vegetable fats.

Therefore, the method and apparatus for purifying fumes according to the invention allow fumes to be treated effectively, allowing them to be re-emitted into the same working environment in which they are emitted, thus without requiring the presence of a chimney for the removal and expulsion of fumes.

In the practical implementation of the invention, the materials used, as well as the shape and dimensions, can be any depending on the requirements.

Where the technical characteristics mentioned in each claim are followed by reference marks, these reference marks have been included for the sole purpose of increasing the understanding of the claims and, consequently, they have no limiting value on the purpose of each element identified by way of example by such reference marks.

## Claims

1. An apparatus (1) for filtering, purifying, and deodorizing greasy-oily vapors and fumes, comprising
a box-shaped structure (90) forming an extraction hood positioned above a source emitting said fumes, and a housing (100) positioned above said box-shaped structure (90), wherein said box-shaped structure (90) and/or said housing (100) comprise at least one mechanical device (110) for filtering said fumes and vapors;
at least one device for extracting said fumes and vapors;
at least one refrigerated condensation module (120) capable of purifying said fumes and vapors by refrigerated condensation;
at least one activated carbon device (130) capable of deodorizing said fumes and vapors; said at least one mechanical filtration device (110) for filtering said fumes; at least one device for extracting said fumes; at least one refrigerated condensation module (120) capable of purifying said fumes by refrigerated condensation and at least one activated carbon device (130) capable of deodorizing said fumes, being arranged in sequence in a path through which said fumes pass.

2. The apparatus of claim 1, wherein it comprises a pair of side side partitions (200), arranged on the sides of said emission source of said fumes and vapors and arranged below said housing (100).

3. The apparatus of any one of the preceding claims, wherein said box structure (90) and/or said housing (100) comprise internally an electrostatic filter (140) capable of performing electrostatic purification of said fumes and vapors.

4. The apparatus of any one of the preceding claims, wherein said mechanical device (110) for filtering said fumes comprises a cross-mesh filter and/or a labyrinth filter.

5. The apparatus of any one of the preceding claims, wherein said refrigerated condensation module (120) capable of performing refrigerated condensation purification of said fumes and vapors comprises a refrigerated chamber (121) which internally houses a heat exchanger device; said fumes and vapors being capable of passing through said refrigerated chamber (121) and separating a fraction thereof by condensation in contact with said heat exchanger device.

6. The apparatus of claim 5, wherein said heat exchanger device comprises an evaporator, a condenser (123), and a compressor (124) of a refrigeration circuit.

7. The apparatus of claim 5 or 6, wherein it comprises means for detecting a temperature of said refrigerated chamber (121) and/or a temperature at said compressor (124), and comprises means configured to control the switching on and off of said heat exchanger device as a function of said detected temperature.

8. The apparatus according to any one of claims 5 to 7, wherein it comprises means for detecting a temperature at said evaporator and/or said condenser (123) and comprises means configured to control the switching on and off of said heat exchanger device as a function of said detected temperature.

9. The apparatus of any one of claims 5 to 8, wherein it comprises means for detecting the pressure of a refrigerant of said refrigeration circuit at said evaporator, condenser (123) or compressor (124) and comprises means configured to control the switching on and off of said heat exchanger device as a function of said detected pressure.

10. The apparatus of any one of claims 5 to 9, wherein it comprises, downstream of said refrigerated chamber (121), means for separating condensation droplets from the flow of said fumes and vapors to be treated.

11. A method for filtering, purifying, and deodorizing greasy-oily vapors and fumes, comprising the following steps:
a. providing apparatus (1) for purifying fumes, comprising a box-shaped structure (90) forming an extraction hood arranged above a source emitting said vapors and fumes and a housing (100) arranged above said box-shaped structure (90);
b. performing a first stage of treatment of the vapors and fumes emitted by said emission source, extracting said vapors and fumes by means of an extraction device and introducing them into a mechanical filtration device (110);
c. performing a second stage of treatment of said fumes, introducing said fumes, downstream of said mechanical filtration device (110), into a refrigerated condensation module (120) capable of performing purification by refrigerated condensation;
d. performing a third stage of treatment, introducing the fumes, downstream of the refrigerated condensation module (120) designed to perform purification by refrigerated condensation, into an activated carbon device (130) designed to perform deodorization of the fumes.

12. The method of claim 11, wherein it provides for performing an additional stage of treatment of said fumes, introducing said fumes into the device (140) capable of performing electrostatic purification of said fumes and vapors.

13. The method of claim 11 or 12, wherein, at the end of said stages of treatment of said fumes, it provides for the purified and deodorized fumes to be reintroduced into the same working environment.
